# EUROPÄISCHE PATENTANMELDUNG

(11) **EP 0 637 835 A1**
(43) Veröffentlichungstag der Anmeldung: **08.02.1995**
(21) Anmeldenummer: 94106572.4
(22) Anmeldetag: 27.04.1994
(51) Int. Cl.: H01J 61/70, G01N 17/00

(54) **Beleuchtungsanordnung für Licht- und Wetterechtheitsprüfgeräte mit einer Xenon-Gas-Entladungslampe**

(30) Priorität: 02.08.1993 DE 4325718
(71) Anmelder: Heraeus Xenotest GmbH, D-63450 Hanau (DE)
(72) Erfinder: Rudolph, Bernd, D-63755 Alzenau (DE); Dietz, Klaus Jürgen, Dr., D-65195 Wiesbaden (DE); Oostlander, Klaas, D-63452 Hanau (DE)
(74) Vertreter: Kühn, Hans-Christian

(57) **Zusammenfassung**

Eine Beleuchtungsanordnung für Licht- und Wetterechtheitsprüfgeräte ist mit einer impulsbetriebenen Xenon-Gas-Entladungslampe mit einem langgestreckten Entladungskolben versehen, der einen Elektrodenabstand im Bereich von 10 bis 50 cm aufweist; durch Einstellung des Tastverhältnisses des Lampenstromes mittels elektronischer Steuereinrichtung wird ein vorgegebenes Verhältnis von Ultraviolett- zu Infrarot-Strahlung erzielt; der Lampenkolben ist zwecks hoher Leuchtdichte U-förmig gebogen.

## Beschreibung

Die Erfindung betrifft eine Beleuchtungsanordnung für Licht- und Wetterechtheitsprüfgeräte, mit einer Xenon-Gas-Entladungs-Lampe, mit einem langgestreckten Lampenkolben, der an seinen Enden jeweils eine Elektrode aufweist, zwischen denen eine Bogenentladung brennt, wobei die Lampe mittels elektronischer Steuereinrichtung, die einen steuerbaren Schalter aufweist, im Impulsbetrieb betrieben wird.

Aus der DE-PS 35 04 793 ist eine Beleuchtungsanordnung für ein Licht- und Wetterechtheitsprüfgerät zur genauen Einstellung eines UV-Strahlung, IR-Strahlung und sichtbaren lichtumfassenden definierten Strahlenspektrums mittels eines Xenon-Strahlers bekannt, wobei die Anordnung mindestens zwei Sektoren aufweist, aus denen die Strahlung austritt, und UV-Spiegel, die für UV-Strahlung undurchlässig sind sowie ein UV-Filter und mindestens ein IR-Filter vorgesehen sind, die für sichtbares Licht durchlässig sind. Jedem der Sektoren ist ein Xenon-Strahlenquelle zugeordnet; die Filterstrahler-Anordnung wird dabei zunächst von einem Quarzinnenzylinder mit selektiv reflektierender Schicht für IR jedoch durchlässig für UV und sichtbarem Licht sowie einem daran anschließenden Wassermantel, welcher langwellige IR-Strahlung absorbiert, einem Quarzaußenzylinder und schließlich von einem abschließenden dreiteiligen aus UV-Spezial- oder Fensterglas bestehenden Mantel umgeben. Mittels dieser Beleuchtungsanordnung ist es möglich, die Intensität vorgegebener Spektralanteile gezielt zu dämpfen bzw. das Verhältnis von Ultraviolett- zu Infrarot-Anteilen, das für die Werkstoffprüfung besonders wichtig ist, gezielt einzustellen.

Weiterhin ist es aus dem Buch "Ultraviolette Strahlen" Herausgeber Jürgen Kiefer, Verlag Walter de Gruyter, Berlin, New York 1977, Seite 95 bekannt, die spektrale Lichtausbeute von Blitzlampen mit Xenon-Füllung durch Vorgabe von Gasdruck-Entladungsdauer sowie der elektrischen Parameter wie Bogenlänge, angelegte Spannung und Stromdichte gezielt einzustellen. Auf Seite 90 des gleichen Buches wird im vorletzten Absatz auf wandstabilisierte Lampen für Impulsbetrieb verwiesen, die für Materialprüfung und Halterung geeignet sind. Wie dem zweiten Absatz der Seite 90 zu entnehmen ist, ist es dabei wesentlich, daß die Xenon-Entladungslampe keine Einbrennzeit benötigt, d.h. daß sie unmittelbar nach der Zündung ihre volle Leistung erreicht; aus diesem Grunde sind Xenon-Lampen leicht zu modellieren bzw. als Blitzlampen einzusetzen.

Weiterhin ist aus dem Firmenprospekt der W. C. Heraeus GmbH mit der Nummer D 310561/3C 6.89/N Ko bekannt, mittels Strahlerfilter-Systemen die natürliche Sonnenstrahlung zu simulieren, wobei auf Seite dieses Prospektes die spektrale Energieverteilung der Beleuchtungsanordnung im Vergleich zur Global-Strahlung angegeben sind.

Aus der US-PS 4,884,009 ist eine Gasentladungslampe bekannt, bei der die Emissionsfarbe direkt mit der Dauer des Stromimpulses in Zusammenhang steht. So werden beispielsweise Stromimpulse von weniger als 5 ms, vorzugsweise von 1 ms beschrieben und sogenannte lange Stromimpulse zwischen 5 und 10 ms, wobei die kurzen Impulse eher eine Glimmentladung und die langen Impulse einen Übergang von der Glimm-Zur-Bogenentladung erzeugen; hier sind allerdings auch die übrigen Parameter wie Fülldruck, Dotierungsmaterialien und Füllgas für die emittierte Strahlung mit verantwortlich. Möglichkeiten zur Ausnutzung vorgegebener Spektralanteile für Testgeräte sind dieser Patentschrift jedoch nicht zu entnehmen.

Die Erfindung stellt sich die Aufgabe, eine raumsparende Beleuchtungsanordnung mit Entladungslampe mit vorgegebenem Ultraviolett- zu Infrarot-Strahlungsverhältnis anzugeben, wobei die Entladungslampe keine Einbrennzeit benötigt und eine rasche Abklingzeit aufweist. Die Beleuchtungsanordnung soll in Material-Prüfvorrichtungen mit hoher Energieausbeute eingesetzt werden.

Die Aufgabe wird dadurch gelöst, daß der die Bogenlänge festlegende Elektrodenabstand im Bereich von 10 bis 50 cm bei einem Innendurchmesser des Kolbens im Bereich von 5 bis 15 mm liegt, daß das Tastverhältnis im Bereich von 1:1 bis 1:100 und die Amplitudenwerte des Entladungsstroms zwischen 15 und 100 A bei einem Kaltfülldruck kleiner als 400 mbar liegen.

In einer bevorzugten Ausführungsform besteht der Lampenkolben aus einem U-förmig gebogenen Entladungsrohr, dessen Enden jeweils eine Elektrode aufweisen. Als vorteilhaft erweist sich dabei die kleine Bauform für den Niederdruckstrahler unter Wahrung der erforderlichen Bogenlänge, wobei eine hohe Leuchtdichte erzielt wird.

In einer bevorzugten Ausführungsform besteht der Entladungsstrom aus Impulsen wechselnder Polarität, wobei die maximale Dauer der Stromimpulse 10 ms beträgt. Als vorteilhaft erweist sich hierbei die gleichmäßige Erwärmung beider Elektroden.

Als elektronische Steuereinrichtung wird ein Wechselstromsteller eingesetzt, welcher entweder mit zwei antiparallel geschalteten Thyristoren oder einem Triag versehen ist. Die elektronische Steuerung ist vorzugsweise mit einem Wechselspannungs-Versorgungsnetz verbunden, wobei die Impulsfolgefrequenz des Entladungsstromes der Netzfrequenz entspricht. Als vorteilhaft erweist es sich, daß hier ein handelsübliches Gerät, z.B. ein Dimmergerät eingesetzt werden kann.

Weitere vorteilhafte Ausgestaltungen der Beleuchtungsanordnung sind in den Unteransprüchen angegeben.

Im folgenden ist der Gegenstand der Erfindung anhand der Figuren 1, 2a, 2b, 2c, 2d, 2e, 2f und 3 näher erläutert.
Figur 1a zeigt schematisch eine U-förmig gebogene Xenon-Entladungslampe in einem Werkstoff-Prüfgerät mit einer ausschnittsweise dargestellten Halterung für die Werkstoffproben, wobei zwecks besserer Übersich Gehäusewand, Probenträger und Lampenanschluß teilweise aufgebrochen dargestellt sind,
Figur 1b zeigt einen Längsschnitt durch die in Figur 1a dargestellte Anordnung,
die Figuren 2a, 2b, 2c, 2d, 2e und 2f zeigen Wechselstromsteller in verschiedenen Ausführungsformen zum Betrieb der Entladungslampe,
Figur 3 zeigt die spektrale Energieverteilung der erzeugten Strahlung, die gemäß Prospekt D 310561/3C 6.89/N Ko gefiltert ist.

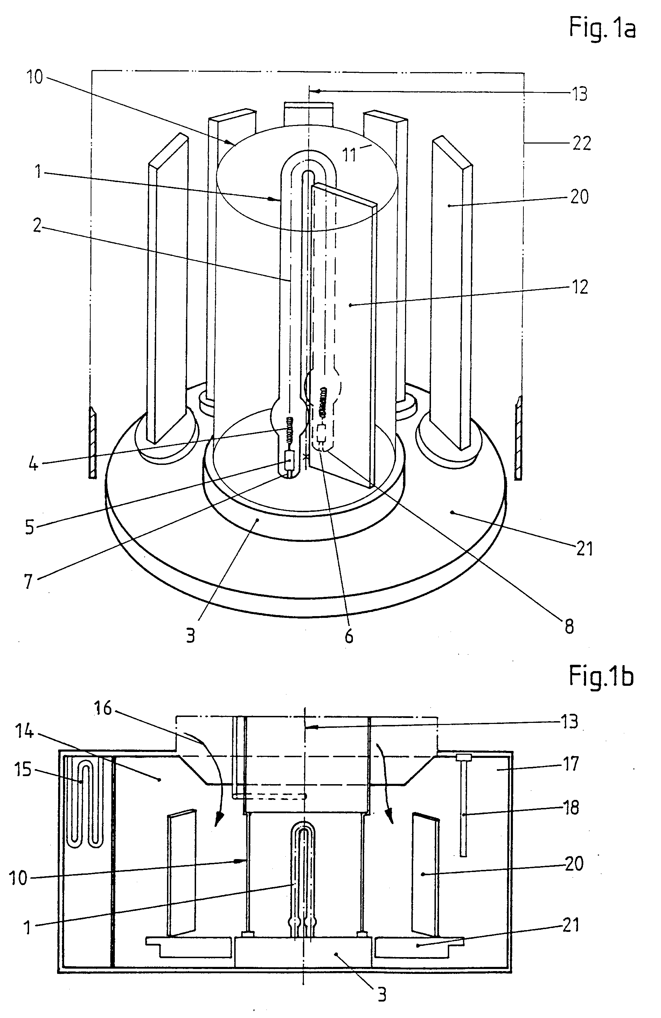

Gemäß Figur 1 befindet sich die U-förmig gebogene Xenon-Entladungslampe 1 mit ihrem U-förmigen rohrartigen Entladungsraum 2 auf einer Basisplatte 3, wobei die Enden des U-förmigen Lampenkolbens 2 jeweils die Elektroden 4 aufweisen, deren Stromdurchführungen 5 und 6 dichtend durch die Rohrenden 7 und 8 des Kolbens geführt sind und mit kontaktierenden Halterungen innerhalb der Basisplatte 3 elektrisch und mechanisch fest gehaltert sind.

Die Basisplatte 3 dient zur Halterung eines Ringfilters 10, welches die zur Werkstoffprüfung erwünschte UV-Strahlung sowie sichtbare Lichtstrahlung durchläßt während die ebenfalls von der Entladungslampe erzeugte Infrarot-Strahlung mittels einer auf der Innenseite des Ringfilters aufgebrachten Interferenzschicht 11 auf einen im Inneren des Ringfilters befindlichen plattenförmigen Absorber 12 reflektiert wird; der Absorber 12 ist mit einer Kühlvorrichtung verbunden, die hier jedoch zwecks besserer Übersicht nicht dargestellt ist.

Die Basisplatte ist von mehreren Probenträgern 20 umgeben, welche auf einem konzentrisch um den Ringfilter 10 drehbaren Rotor 21 aufgebracht sind. Um besondere atmosphärische Bedingungen im Bereich der Proben zu erzielen, ist es möglich den Probenraum mittels eines umgebenden Gehäuses 22 gegenüber der Außenwelt abzudichten, wobei die Stromdurchführungen 5 und 6 der Lampenenden 7 und 8 innerhalb der Basisplatte atmosphärisch dicht eingesetzt sind oder ggf. die Lampe 1 von einem hier zwecks besserer Übersicht nicht dargestellten Gehäuse, beispielsweise durch ein abgeschlossenes Ringfilter umgeben ist, welches die im Probenraum herrschenden atmosphärischen Bedingungen von der Lampe und ihren Anschlüssen fernhält. Solche atmosphärischen Bedingungen können je nach Anforderung im Probenraum bzw. in einem Sektor simuliert werden, wobei auf die Werkstoffproben bei einem Durchlauf des jeweiligen Probenträgers zeitlich nacheinander verschiedenartige Klimazonen durchlaufen werden können, wobei es möglich ist, die Strahlung kontinuierlich auf die Proben einwirken zu lassen.

Anhand der schematischen Anordnung gemäß Figur 1b ist erkennbar, daß ein sekloraler Bereich 14 mit einer Erwärmungseinrichtung 15 und einer Bewässerungsvorrichtung 16 versehen ist, während der diametral gegenüberliegende sektorale Bereich 17 mit einer Sensorvorrichtung 18 versehen ist, welche zur Temperatur, Feuchtigkeits- und Strahlungsintensitätsermittlung sowie ggf. zur Gasanalyse der Probenraumatmosphäre dient.

Aufgrund der unterschiedlichen Abstrahlcharakteristik der U-förmig gebogenen Lampe 1 hat es sich als besonders zweckmäßig erwiesen, zwecks gleichmäßiger Belichtung der Proben diese mittels des Rotors 21 kontinuierlich um die feststehende Basisplatte mit Entladungslampe 1 rotieren zu lassen, wobei der zugehörige Antrieb zwecks besserer Übersichtlichkeit nicht dargestellt ist.

Ein wesentliches Charakteristikum der Erfindung ist darin zu sehen, daß aufgrund der gebogenen Entladungslampe 1 die Prüfeinrichtung bei hoher Strahlungsintensität außerordentlich kompakt gestaltet werden kann, wobei aufgrund der Impulsbetriebes sowie der dazugehörigen Parameter wie Bogenlänge, Stromdichte, Kaltfülldruck ein ganz bestimmtes Spektrum gezielt eingestellt werden kann, welches für die Alterung der Werkstoffproben besonders wirksam ist. Die hierzu erforderliche Schal- tungsanordnung wird anhand der nachfolgenden Figuren beschrieben.

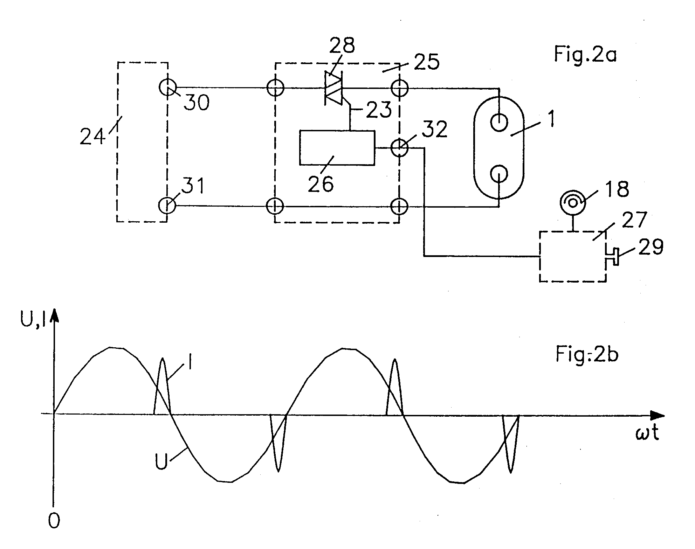

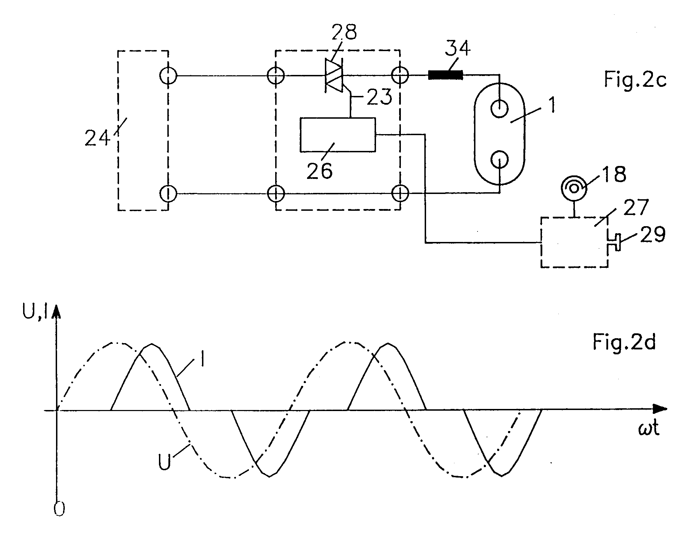

Anhand Figur 2a ist die Stromversorgung eines Strahlers 1 erkennbar, welcher über die Klemmen 30, 31 einer Stromversorgung 24 von einem Wechselstromsteller 25 gespeist wird, der wiederum von einem Steuergerät 26 angesteuert wird. Am Steuereingang 32 des Steuergerätes 26 ist ein Stellgerät bzw. ein Regler 27 angeschlossen, welcher mit einem Photo-Sensor 18 als Istwert-Geber und einer Feinjustierung 29 versehen ist; bei einem Einsatz des Stellgerätes als Regler dient Feinjustierung 29 als Sollwertgeber für das gewünschte Spektrum. Es ist selbstverständlich auch möglich, in einer vereinfachten Form das Stellgerät 27 ohne Regelfunktion zu betreiben, wobei dann auf den Photo-Sensor als Istwert-Geber verzichtet wird und die Einstellung der von der Lampe 1 ausgehenden Strahlung über die Feinjustierung 29 vorgenommen wird. Als elektronischer Schalter innerhalb des Wechselstromstellers 25 hat sich insbesondere der Einsatz eines Triacs 28 als zweckmäßig erwiesen, welches direkt über Anschluß 23 mit dem Sternergerät 26 verbunden ist.

Wie dem zugehörigen Strom-/Spannungs-Zeitdiagramm gemaß Figur 2b zu entnehmen ist, wird das Triac 28 innerhalb des Wechselstromstellers durch Steuergerät 26 periodisch so angesteuert, daß mittels Phasenanschnittsteuerung jeweils im Bereich von 160 bis 180° und von 340 bis 360° der Spannungskurve U Strom I fließt. Mittels der symbolisch dargestellten Feinjustierung 29 des mit dem Steuergerät 26 verbundenen Stellgerätes 27 wird der Phasenanschnitt so eingestellt, daß sich ein erwünschter UV-Spektralanteil im Bereich von 200 bis 400 nm ergibt, wie er für die jeweilige Materialprobe erforderlich ist. Wie bereits vorstehend erwähnt, ist es jedoch auch möglich, das von Lampe 1 abgegebene Spektrum mittels Photo-Sensor 18 aufzunehmen und dem als Regler dienenden Stellgerät 27 zuzuführen, welches durch Vergleich mit einem spektralen Sollwert-Geber das Steuergerät solange nachstellt, bis das vom Sollwert-Geber erzeugte Spektrum mit dem von der Lampe 1 abgebenen Istwert übereinstimmt. Die Speisung des Wechselstromstellers 25 erfolgt im vorliegenden Fall über die Klemmen 30, 31 des Stromversorgungsgerätes bzw. Wechselstromnetzanschlusses. Es ist jedoch auch möglich, einen eigenen Wechselstromgenerator einzusetzen. In dem durch die Figuren 2a, 2b dargestellten Ausführungsbeispiel beträgt die maximale Stromstärke 12 A und die am Strahler anliegende Spannung 115 V, wobei der Bogen eine Länge von 280 mm aufweist. Der Kaltfülldruck des Xenon-Strahlers 1 liegt im Bereich von 100 mbar bis 400 mbar. Selbstverständlich ist es möglich, durch zusätzliche Dotierungsmaterialien wie beispielsweise SnJ₂ den UV-Spektralanteil noch weiter zu erhöhen.

Gemäß Figur 2c und Strom-/Spannungsdiagramm 2d ist es auch möglich, den Strahler 1 mit einer verhältnismäßig geringen Spannung von beispielsweise 65 V zu betreiben, wobei die Zündwinkel des Stromes I im Bereich von 85 bis 90° und von 165 bis 180° der Spannungskurve U liegen, und eine maximale Stromdichte von 35 A erzielt wird; die Ansteuerung des Steuergerätes erfolgt analog zu Figur 2a. Die Induktivität 34 dient zur Strombegrenzung.

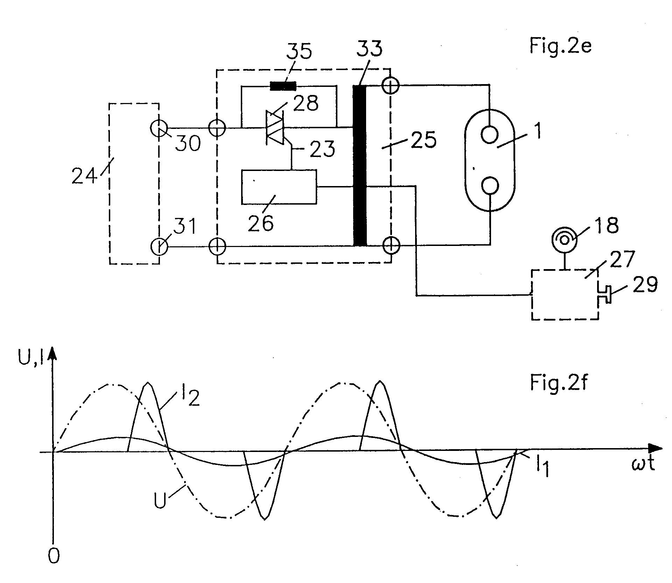

Gemäß Figur 2e ist es möglich, durch Einsatz eines an den Wechselstromsteller 25 angeschlossenen Spartransformators 33 die Spannung des Strahlers 1 so zu erhöhen, daß diese in einer Größenordnung von 390 V liegt. Die Schaltungsanordnung von Steuergerät 26 und Stellgerät bzw. Regler 27 entspricht des anhand Figur 2a und 2c erläuterten Prinzips. Wie dem zugehörigen Stromspannungs-Zeitdiagramm nach Figur 2f zu entnehmen ist, wird über eine zum Triac 28 parallel geschaltete Induktivität 35 ein phasengleich zu Spannung U verlaufender Grundstrom I₁ mit einer maximalen Amplitude von 7 A erzeugt, dem ein mittels Phasenanschnitt-Steuerung über Steuerelektronik fließender Strom I2 überlagert wird. Der Zündwinkel des maximal 16 A betragenden Stromes liegt im Bereich von 85 bis 95° bzw. 175 bis 185°, wobei auch hier der Wechselstromsteller 25 direkt an den Klemmen 30, 31 der Spannungsversorgung angeschlossen ist. Auch hier ist es möglich mittels einer Feinjustierung 29 den erwünschten Spektralbereich mittels Verstellung des Phasenanschnittswinkels exakt einzustellen; es ist jedoch wie bereits vorstehend beschrieben auch möglich, einen von der Strahlung beaufschlagten Sensor 18 vorzusehen, dessen im UV-Bereich ermittelte Spektral-Anteile mit einem Sollwert verglichen und über einen Regler der Steuerelektronik zugeführt wird.

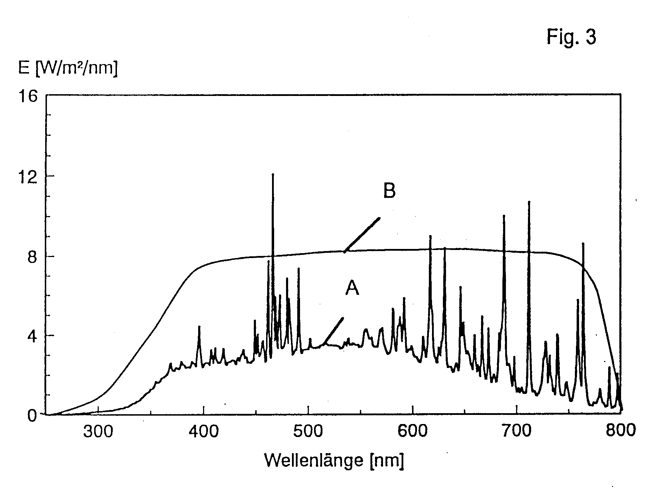

Figur 3 zeigt schematisch die spektrale Energieverteilung der Beleuchtungsanordnung der Erfindung gemäß Kurve B gegenüber der üblichen Verteilung von Xenonstrahlern nach Kurve A; wie Kurve B zu entnehmen ist, reicht der UV-Bereich hoher Intensitit von ca. 200-400 mm und der Infrarot-Bereich von 700-800 mm.

## Patentansprüche

1. Beleuchtungsanordnung für Licht- und Wetterechtheitsprüfgeräte mit einer Xenon-Gas-Entladungs-Lampe, einem langgestreckten Lampenkolben, der an seinen Enden jeweils eine Elektrode aufweist, zwischen denen eine Bogenentladung brennt, wobei die Lampe mittels elektronischer Steuereinrichtung, die einen steuerbaren Schalter aufweist, im Impulsbetrieb betrieben wird,
dadurch gekennzeichnet,
daß der die Bogenlänge festlegende Elektrodenabstand im Bereich von 10 bis 50 cm bei einem Innendurchmesser des Kolbens (9) im Bereich von 5 bis 15 mm liegt, daß das Tastverhältnis im Bereich von 1:1 bis 1:100 liegt und die Amplitudenwerte des Entladungsstroms zwischen 15 und 100 A bei einem Kaltfülldruck kleiner als 400 mbar liegen.

2. Beleuchtungsanordnung nach Anspruch 1, dadurch gekennzeichnet, das die Periodendauer im Bereich von 0,5 ms bis 500 ms liegt.

3. Beleuchtungsanordnung nach Anspruch 1 oder 2, dadurch gekennzeichnet, daß der Lampenkolben (9) aus einem ein- oder mehrfach abgebogenem Rohr besteht, dessen Enden jeweils eine Elektrode aufweisen.

4. Beleuchtungsanordnung nach einem der Ansprüche 1 oder 3, dadurch gekennzeichnet, daß der Lampenkolben (9) aus einem U-förmig gebogenen Rohr besteht, dessen Enden (7, 8) jeweils eine Elektrode (4) aufweisen.

5. Beleuchtungsanordnung nach einem der Ansprüche 1 bis 4, dadurch gekennzeichnet, daß der Entladungsstrom aus Impulsen wechselnder Polarität besteht.

6. Beleuchtungsanordnung nach einem der Ansprüche 1 bis 5, dadurch gekennzeichnet, daß die maximale Dauer der Stromimpulse 10 ms beträgt.

7. Beleuchtungsanordnung nach einem der Ansprüche 1 bis 6, dadurch gekennzeichnet, daß die elektronische Steuereinrichtung ein Wechselstromsteller ist.

8. Beleuchtungsanordnung nach einem der Ansprüche 1 bis 7, dadurch gekennzeichnet, daß die elektronische Steuereinrichtung mit einem Wechselspannungsversorgungsnetz verbunden ist.

9. Beleuchtungsanordnung nach Anspruch 8, dadurch gekennzeichnet, daß die Impulsfolgefrequenz für den Entladungsstrom der Netzfrequenz entspricht.
